# EUROPEAN PATENT SPECIFICATION

(11) **EP 1 992 532 B1**
(45) Date of publication and mention of the grant of the patent: **08.01.2014**
(21) Application number: 08154549.3
(22) Date of filing: 15.04.2008
(51) Int. Cl.: B60R 22/46

(54) **Cylinder in pretensioner for seat belt retractor and pretensioner for seat belt retractor employing the same**
Zylinder im Straffer für einen Sitzgurteinzug und Straffer für einen Sitzgurteinzug damit
Cylindre de prétendeur pour rétracteur de ceinture de sécurité et prétendeur pour rétracteur de ceinture de sécurité l'utilisant

(30) Priority: 16.05.2007 KR 20070047791
(43) Date of publication of application: 19.11.2008
(73) Proprietor: Autoliv Development AB, 447 83 Vårgårda (SE)
(72) Inventor: Choi, In-Su, 486-833, Gyeonggi-do (KR); Lee, Jung-Min, 131-824, Séoul (KR); Lee, Byung-Jin, 704-400, Daegu (KR); Lee, Dong-Sub, 1805 (24/1) Bankok_Dong (KR); Bai, Sang-Hong, 220-801, Gangwon-do (KR); Bae, Gi-Young, 220-100, Gangwon-do (KR); Kim, Jong-Kag, 220-100, Gangwon-do (KR); Kim, Do-Sik, 151-010 Seoul (KR)
(74) Representative: Becker, Thomas

(56) References cited:
- EP-A2- 0 940 603
- WO-A1-2007/136457
- WO-A2-2006/099600
- US-A- 5 906 327

## Description

The present invention relates to a pretensioner for a seat belt retractor of a vehicle, comprising a torsion bar on which a webbing is wound, a gear member connected to the torsion bar, a cylinder, into which a gas is supplied when the vehicle is abruptly decelerated, and, when seen from a side view, having an L-shaped hollow part, one part of which forms a gas supply port and the other part of which forms a straight moving guide hole, a piston moveable along the straight moving guide hole having a rack formed at a side surface thereof in a longitudinal direction, a sealing part arranged at the lower end of the piston, whereas the moving guide hole along which the piston reciprocates extends downward beyond the sealing part in an initial assembly state.

A pretensioner having the afore-mentioned features is known from US 5 906 327 A. As far as a rotationally supported spool bearing the webbing of the seat belt and having a torsion bar associated therewith shall be rotated by a pretensioner the known pretensioner includes a cylinder for driving a piston arranged linearly moveable therein when in the case of an abruptly decelerating of the vehicle gas is supplied into the cylinder. The piston is coupled to a gear member for rotating the torsion bar and spool and for this purpose has a rack formed at a side surface thereof in a longitudinal direction. Inside the hollow part of the cylinder guiding the piston at the lower end of the piston a sealing part is arranged.

Similar pretensioners are disclosed in WO 2006/099600 A2 and EP 0 940 603 A2, both having a cylinder-guided piston driving a gear member by a rack formed at a side surface thereof. The aspect of sealing the piston against the inner wall of the cylinder is not mentioned within both documents.

Insofar one object of the invention is to improve the sealing between the piston and the cylinder; a further object is to secure the piston in its initial position before gas is supplied into the cylinder.

As solution of these problems the invention consists of the features as mentioned within claim 1 whereas the piston has a cylindrical sealing operation part integrally formed with a bottom of the piston and projecting therefrom, whereas the sealing part is coupled to an outer periphery of the sealing operation part to seal between the piston and an inner wall of the cylinder and a hooking means are arranged for hooking the piston at an initial hooking position.

According to one embodiment of the invention the sealing part may be an O-ring.

In addition, the sealing part may be a plastic coating part.

Further, the hooking means may be a position fixing piece connected to the gear member formed at a base member through which the torsion bar passes and having a shape meshed with the rack of the piston.

Furthermore, the base member may have a guide piece disposed at a position opposite to the position fixing piece with the piston interposed therebetween and having a surface parallel to the piston.

In addition, the cylinder may have a guide cover fixed thereto to guide the piston.

According to one embodiment of the invention the straight moving guide hole may partially cross the gas supply port.

For this purpose, a first thick part may be formed inside the L-shaped hollow part to form the straight moving guide hole and an intermediate passage may be formed between the first thick part and the gas supply port.

In addition a spherical rotation space may be connected between a lower end of the moving guide hole and the intermediate passage.

Further a second thick part may be formed around the spherical rotation space.

Furthermore, the second thick part may have a thickness gradually thinned from around the spherical rotation space to both sides thereof.

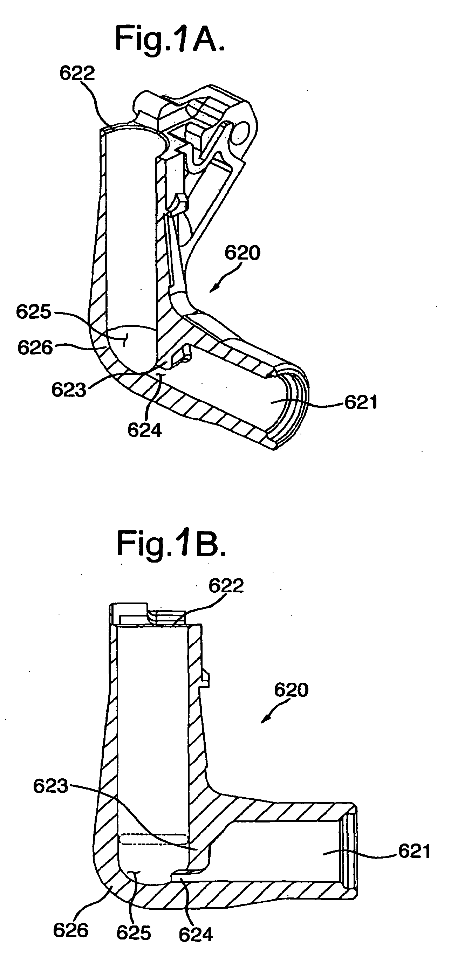

The above and other features and advantages of the present invention will be more apparent from the following detailed description taken in conjunction with the accompanying drawings, in which
FIG. 1A is a partially cut perspective view of a cylinder in a pretensioner for a seat belt retractor in accordance with an exemplary embodiment of the present invention;
FIG. 1B is a longitudinal cross-sectioned view of the cylinder in a pretensioner for a seat belt retractor in accordance with an exemplary embodiment of the present invention;

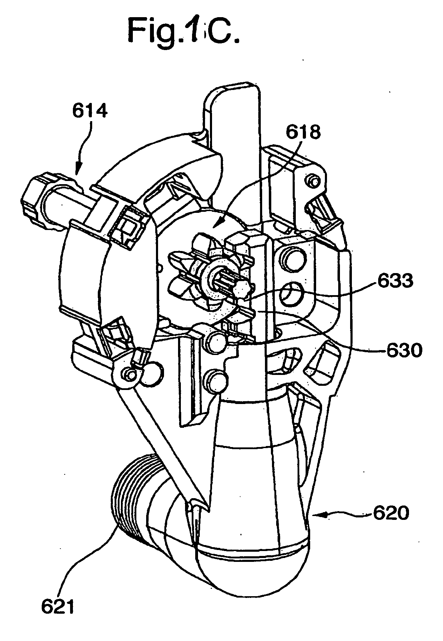

FIG. 1C is a perspective view of a pretensioner for a seat belt retractor, in which a cylinder in accordance with an exemplary embodiment of the present invention is installed;

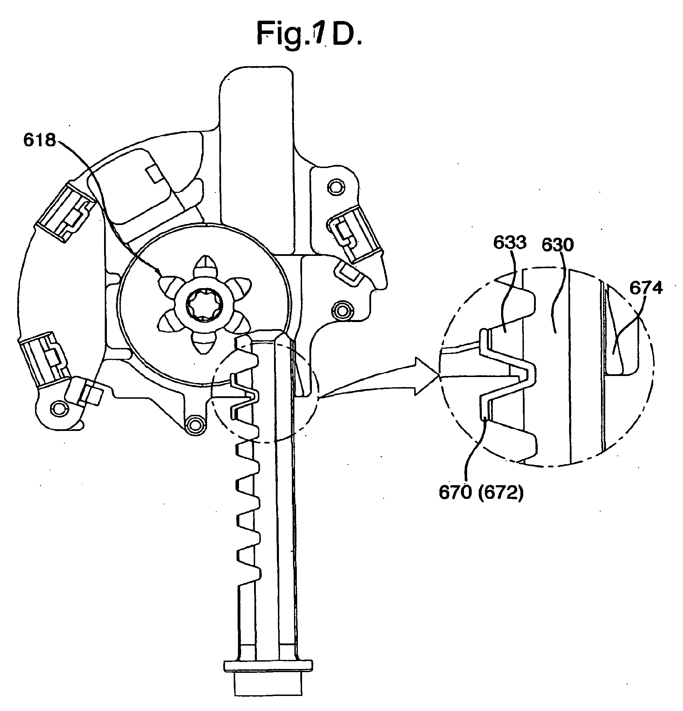

FIG.1D is a side view of the pretensioner for a seat belt retractor, from which the cylinder of FIG. 1C is removed;

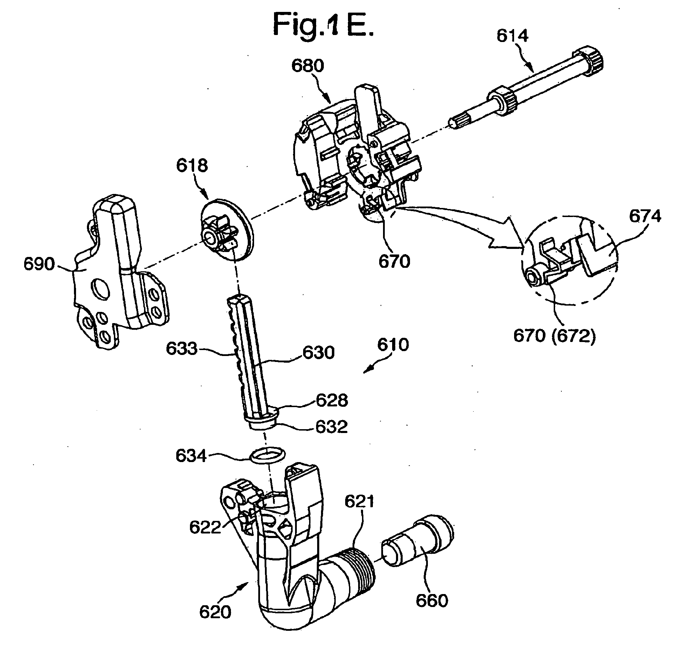

FIG. 1E is an exploded perspective view of the pretensioner of FIG. 1C and

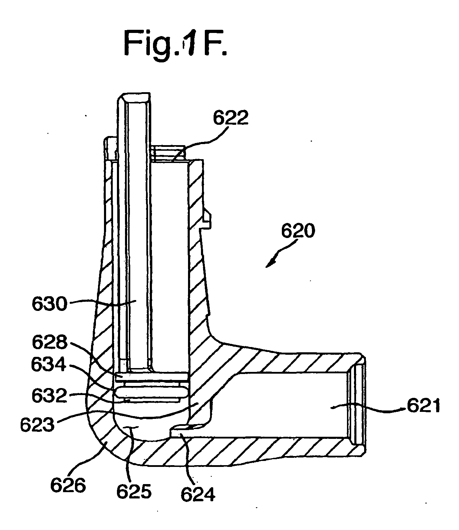

FIG.1F is a cross-ssectioned view showing the cylinder and the piston in accordance with an exemplary embodiment of the present invention, which are assembled to each other.

### DESCRIPTION OF THE PREFERRED EMBODIMENTS

Hereinafter, exemplary embodiments of the present invention will be described with reference to the accompanying drawings.

As shown, a cylinder 620 in a pretensioner for a seat belt retractor has an L-shaped hollow shape when seen from a side view. That is, a substantially L-shaped pipe is provided.

The L-shaped cylinder 620 has one hole acting as a gas supply port 621 connected to an inflator 660, and the other hole acting as a straight moving guide hole 622 through which a piston 630 reciprocates.

In accordance with the present invention, the straight moving guide hole 622 vertically extends downward beyond a position of a sealing part 640 in an initial assembly state. The initial assembly state means a state in which the piston 630 is raised by a gas pressure to be appropriately meshed with a gear member 618. In the initial assembly state, a rack 633 of the piston 630 is hooked by a hooking means 670 formed at the sealing operation member 680. Therefore, a gap (or a marginal space) is formed between the sealing part 634 and a lower end of the straight moving guide hole 622.

The sealing part 634 may be formed of an O-ring or a plastic coating part In addition, since the piston 630 has a length of no more than 6-8cm, in order to extend the straight moving guide hole 622 more than the conventional art, a specific constitution is required in the hollow part For example, as shown, the straight moving guide hole 622 is formed to partially and vertically cross the gas supply port 621.

Further, the L-shaped cylinder 620 has a first thick part 623 disposed at an inner corner to form the straight moving guide hole 622, and an intermediate passage 624 formed between the first thick part 623 and the gas supply port 621. A gas passes through the intermediate passage 624 to press a lower end of the piston head 628 formed at a lower end of the piston 630.

Eventually, since the first thick part 623 causes the straight moving guide hole 622 to be deeper, a space between the lower end of the piston head 628 and an intermediate inner wall of the cylinder 620 becomes wider.

Moreover, a partially spherical rotation space 625 is connected between a lower end of the straight moving guide hole 622 and the gas supply port 621. Therefore, the gas passed through the gas supply port 621 and the intermediate passage 624 can be smoothly introduced into the moving guide hole 622.

A second thick part 626 may be formed around the partially spherical rotation space 625. Therefore, it is possible to prevent the outer corner part of the cylinder 620 from being broken by a high pressure gas.

The second thick part 626 may have a thickness gradually thinned from around the spherical rotation space 625 to both sides of the cylinder 620. Therefore, it is possible to reduce a volume of the cylinder 620 while maintaining its strength.

In the drawings, a structure of a pretensioner 610 including a cylinder 620 in accordance with an exemplary embodiment of the present invention is partially illustrated.

As shown, the pretensioner 610 in accordance with an exemplary embodiment of the present invention includes a torsion bar 614 on which a webbing is wound, a gear member 618 connected to the torsion bar 614, a cylinder 620, a piston 630 moved along the moving guide hole 622 formed at a portion of the cylinder 620, and having a rack 633 formed at a side surface thereof in a longitudinal direction, a cylindrical sealing operation part 632 integrally formed with a bottom of the piston 630 and projecting therefrom, a sealing part 634 coupled to an outer periphery of the sealing operation part 632 to seal between the piston 630 and an inner wall of the cylinder 620; and a hooking means 670 for hooking the piston 630 at an initial hooking position. In the drawings, reference numeral 660 designates an inflator 660 installed at a gas supply port 621 of the cylinder 620.

In the drawings, the sealing part 634 is an O-ring but the sealing part 634 may be a plastic coating part.

The hooking means 670 is a position fixing piece 672 connected to the gear member 618, formed at a base member 680 through which the torsion bar 614 passes, and having a shape meshed with the rack 633 of the piston 630.
That is, the position fixing piece 672 is formed of a plate that is shaped to form the rack 633. Reinforcement plates vertically extend upward and downward from upper and lower ends of the shaped plate.

Meanwhile, the base member 680 has a guide piece 674 opposite to the position fixing piece 672 with the piston 630 interposed therebetween. As shown, a surface of the guide piece 674 opposite to the piston 630 is parallel to the piston 630.

Moreover, a guide cover 690 is fixedly installed at the cylinder 610 to guide the piston 630. A guide surface parallel to the piston 630 is formed inside the guide cover 690.

As a result, when the vehicle is abruptly decelerated, e.g. due to collision, a gas is supplied into the cylinder 620 to move the piston 630 upward. Therefore, movement of the rack 633 formed at one side of the piston 630 causes rotation of the gear member 618 meshed with the rack 633 in a winding direction of the webbing.

When the gear member 618 is rotated in the winding direction of the webbing, the webbing is rewound on the torsion bar 614 to closely adhere a passenger to a seat.

Here, since a gas pressure is applied to an O-ring 634 when the piston 630 is moved by the gas pressure, the O-ring 634 is pushed by the piston 630 to be held at the sealing operation part 632. Therefore, the O-ring 634 seals between the piston 630 and the inner wall of the cylinder 620 to improve sealing performance between the piston 630 and the cylinder 620.

In addition, an insert groove (not shown) may be installed around the sealing operation part 632 to securely install the O-ring 634 therein.

Further, since the straight moving guide hole 622 extends downward beyond the O-ring in an initial assembly state, a space for temporarily storing a gas introduced into the moving guide hole of the piston is expanded to provide marginal time to sufficiently apply an upward force. Therefore, the gas discharged from the gas supply port 621 causes an increase in the upward force by the gas pressure applied to the piston head 628.

As can be seen from the foregoing, since a straight moving guide hole in a cylinder, through which a piston reciprocates, extends downward beyond an O-ring in an initial assembly state, it is possible to maintain a wide space in the moving guide hole under a piston head.

Therefore, it is possible to secure marginal time for providing a sufficient upward force due to a temporary storage space for a gas introduced into the moving guide hole of the piston.

In addition, the conventional step in the moving guide hole can be removed to increase a pressure receiving area, thereby maintaining the sufficient upward force against the piston.

Further, a thick part is formed at an outer corner of a cylinder to maintain durability when a high pressure gas is injected.

## Claims

1. Pretensioner for a seat belt retractor of a vehicle, comprising a torsion bar (614) on which a webbing is wound,
a gear member (618) connected to the torsion bar (614),
a cylinder (620), into which a gas is supplied when the vehicle is abruptly decelerated, and, when seen from a side view, having an L-shaped hollow part, one part of which forms a gas supply port (621) and the other part of which forms a straight moving guide hole (622), a piston (630) moveable along the straight moving guide hole (622) having a rack (633) formed at a side surface thereof in a longitudinal direction,
a sealing part (634) arranged at the lower end of the piston (630), whereas the moving guide hole (622) along which the piston (630) reciprocates extends downward beyond the sealing part (634) in an initial assembly state, **characterized in that**
the piston (630) has a cylindrical sealing operation part (632) integrally formed with a bottom of the piston (630) and projecting therefrom, whereas the sealing part (634) is coupled to an outer periphery of the sealing operation part (632) to seal between the piston (630) and an inner wall of the cylinder (620) and
a hooking means (670) are arranged for hooking the piston (630) at an initial hooking position.

2. Pretensioner for a seat belt retractor of a vehicle, according to claim 1, **characterized in that** the sealing part (634) is an O-ring.

3. Pretensioner for a seat belt retractor of a vehicle according to claim 1, **characterized in that** the sealing part (634) is a plastic coating part.

4. Pretensioner for a seat belt retractor of a vehicle according to claim 1, **characterized in that** the hooking means (670) is a position fixing piece (672) connected to the gear member (618) formed at a base member through (680) trough which the torsion bar (614) passes and having a shape meshed with the rack (633) of the piston (630).

5. Pretensioner for a seat belt retractor of a vehicle according to claim 4, **characterized in that** the base member (680) has a guide piece (674) disposed at a position opposite to the position fixing piece (672) with the piston (630) interposed therebetween and has a surface parallel to the piston (630).

6. Pretensioner for a seat belt retractor of a vehicle according to claim 5, **characterized in that** the cylinder (620) has a guide cover (690) fixed thereto to guide the piston (630).

7. Pretensioner for a seat belt retractor of a vehicle according to one of the claims 1 - 6, **characterized in that** the straight moving guide hole (622) partially crosses the gas supply port (621).

8. Pretensioner for a seat belt retractor of a vehicle according to claim 7, **characterized in that** a first thick part (623) is formed inside the L-shaped hollow part to form the straight moving guide hole (622) and an intermediate passage (624) is formed between the first thick part (623) and the gas supply port (621).

9. Pretensioner for a seat belt retractor of a vehicle according to claim 8, **characterized in that** a spherical rotation space (625) is connected between a lower end of the moving guide hole (622) and the intermediate passage (624).

10. Pretensioner for a seat belt retractor of a vehicle according to claim 9, **characterized in that** a second thick part (626) is formed around the spherical rotation space (625).

11. Pretensioner for a seat belt retractor of a vehicle according to claim 10, **characterized in that** the second thick part (626) has a thickness gradually thinned from around the spherical rotation space (625) to both sides thereof.

## Patentansprüche

1. Straffer für einen Sicherheitsgurtaufroller eines Fahrzeugs, der Folgendes umfasst:
einen Torsionsstab (614), auf den ein Gurtband gewickelt ist, ein Zahnradelement (618), das mit dem Torsionsstab (614) verbunden ist, einen Zylinder (620), in den ein Gas geführt wird, wenn das Fahrzeug plötzlich abgebremst wird, und der, von der Seite betrachtet, einen L-förmigen Hohlteil aufweist, dessen einer Teil einen Gaszuführanschluss (621) bildet und dessen anderer Teil ein gerades Führungsloch (622) bildet,
einen Kolben (630), der entlang dem geraden Führungsloch (622) beweglich ist und eine Zahnstange (633) aufweist, die an einer Seitenfläche desselben in einer Längsrichtung gebildet ist,
ein Dichtungsteil (634), das am unteren Ende des Kolbens (630) angeordnet ist,
während sich das bewegliche Führungsloch (622), entlang dem sich der Kolben (630) hin- und herbewegt, in einem anfänglichen Aufbauzustand nach unten über das Dichtungsteil (634) hinaus erstreckt, **dadurch gekennzeichnet, dass**
der Kolben (630) ein zylindrisches Dichtungsbetätigungsteil (632) aufweist, das einteilig mit einer Unterseite des Kolbens (630) gebildet ist und davon hervorsteht, während das Dichtungsteil (634) an einen äußeren Rand des Dichtungsbetätigungsteils (632) gekoppelt ist, um zwischen dem Kolben (630) und einer Innenwand des Zylinders (620) abzudichten, und
ein Einhakmittel (670) zum Einhaken des Kolbens (630) an einer anfänglichen Einhakposition angeordnet ist.

2. Straffer für einen Sicherheitsgurtaufroller eines Fahrzeugs nach Anspruch 1, **dadurch gekennzeichnet, dass** das Dichtungsteil (634) ein O-Ring ist.

3. Straffer für einen Sicherheitsgurtaufroller eines Fahrzeugs nach Anspruch 1, **dadurch gekennzeichnet, dass** das Dichtungsteil (634) ein Teil mit Kunststoffbeschichtung ist.

4. Straffer für einen Sicherheitsgurtaufroller eines Fahrzeugs nach Anspruch 1, **dadurch gekennzeichnet, dass** das Einhakmittel (670) ein Positionshaltestück (672) ist, das mit dem Zahnradelement (618) verbunden ist, das an einem Basisbauelement (680) ausgebildet ist, durch das der Torsionsstab (614) hindurchgeht, und das eine Form aufweist, die in Eingriff mit der Zahnstange (633) des Kolbens (630) steht.

5. Straffer für einen Sicherheitsgurtaufroller eines Fahrzeugs nach Anspruch 4, **dadurch gekennzeichnet, dass** das Basisbauelement (680) ein Führungsstück (674) aufweist, das an einer Position gegenüber dem Positionshaltestück (672) angeordnet ist, wobei der Kolben (630) dazwischen angeordnet ist, und das eine Fläche parallel zum Kolben (630) aufweist.

6. Straffer für einen Sicherheitsgurtaufroller eines Fahrzeugs nach Anspruch 5, **dadurch gekennzeichnet, dass** der Zylinder (620) eine Führungsabdeckung (690) aufweist, die daran befestigt ist, um den Kolben (630) zu führen.

7. Straffer für einen Sicherheitsgurtaufroller eines Fahrzeugs nach einem der Ansprüche 1 bis 6, **dadurch gekennzeichnet, dass** das gerade Führungsloch (622) teilweise den Gaszuführanschluss (621) kreuzt.

8. Straffer für einen Sicherheitsgurtaufroller eines Fahrzeugs nach Anspruch 7, **dadurch gekennzeichnet, dass** ein erster dicker Teil (623) im Inneren des L-förmigen Hohlteils gebildet ist, um das gerade Führungsloch (622) zu bilden, und dass ein Zwischendurchgang (624) zwischen dem ersten dicken Teil (623) und dem Gaszuführanschluss (621) gebildet ist.

9. Straffer für einen Sicherheitsgurtaufroller eines Fahrzeugs nach Anspruch 8, **dadurch gekennzeichnet, dass** ein kugelförmiger Rotationsraum (625) zwischen einem unteren Ende des Führungslochs (622) und dem Zwischendurchgang (624) angeschlossen ist.

10. Straffer für einen Sicherheitsgurtaufroller eines Fahrzeugs nach Anspruch 9, **dadurch gekennzeichnet, dass** ein zweiter dicker Teil (626) um den kugelförmigen Rotationsraum (625) herum gebildet ist.

11. Straffer für einen Sicherheitsgurtaufroller eines Fahrzeugs nach Anspruch 10, **dadurch gekennzeichnet, dass** der zweite dicke Teil (626) eine Dicke aufweist, die um den kugelförmigen Rotationsraum (625) herum zu dessen beiden Seiten nach und nach abnimmt.

## Revendications

1. Prétendeur pour un rétracteur de ceinture de sécurité d'un véhicule, comprenant
une barre de torsion (614) sur laquelle une toile est enroulée,
un élément d'engrenage (618) raccordé à la barre de torsion (614),
un vérin (620) dans lequel un gaz est alimenté quand le véhicule est en décélération brusque et qui, vu de côté, comporte une partie creuse en L dont une partie forme un orifice d'alimentation de gaz (621) et dont l'autre partie forme un trou de guidage mobile droit (622), un piston (630) mobile le long du trou de guidage mobile droit (622) et comportant une crémaillère (633) formée sur une surface latérale de celui-ci dans une direction longitudinale,
un élément d'étanchéité (634) agencé à l'extrémité inférieure du piston (630), le trou de guidage mobile (622) le long duquel le piston (630) effectue des va-et-vient s'étendant vers le bas au-delà de la partie d'étanchéité (634) dans un état d'assemblage initial, **caractérisé en ce que**
le piston (630) comporte une partie opérationnelle d'étanchéité (632) cylindrique formée d'un seul tenant avec une partie inférieure du piston (630) et dépassant de celle-ci, l'élément d'étanchéité (634) étant couplé à une périphérie extérieure de la partie opérationnelle d'étanchéité (632) pour réaliser l'étanchéité entre le piston (630) et une paroi intérieure du cylindre (620), et un moyen d'accrochage (670) est agencé pour accrocher le piston (630) dans une position initiale d'accrochage.

2. Prétendeur pour un rétracteur de ceinture de sécurité d'un véhicule selon la revendication 1, **caractérisé en ce que** l'élément d'étanchéité (634) est un joint torique.

3. Prétendeur pour un rétracteur de ceinture de sécurité d'un véhicule selon la revendication 1, **caractérisé en ce que** l'élément d'étanchéité (634) est une partie d'un revêtement en plastique.

4. Prétendeur pour un rétracteur de ceinture de sécurité d'un véhicule selon la revendication 1, **caractérisé en ce que** le moyen d'accrochage (670) est une pièce de fixation de position (672) raccordée à l'élément d'engrenage (618) formé sur un élément de base (680) à travers lequel la barre de torsion (614) passe et ayant une forme qui s'engrène avec la crémaillère (633) du piston (630).

5. Prétendeur pour un rétracteur de ceinture de sécurité d'un véhicule selon la revendication 4, **caractérisé en ce que** l'élément de base (680) comporte une pièce de guidage (674) disposée dans une position opposée à celle de la pièce de fixation de position (672), le piston (630) étant interposé entre celles-ci et ayant une surface parallèle au piston (630).

6. Prétendeur pour un rétracteur de ceinture de sécurité d'un véhicule selon la revendication 5, **caractérisé en ce qu'**un couvercle de guidage (690) est fixé au cylindre (620) afin de guider le piston (630).

7. Prétendeur pour un rétracteur de ceinture de sécurité d'un véhicule selon l'une quelconque des revendications 1 à 6, **caractérisé en ce que** le trou de guidage mobile droit (622) traverse partiellement l'orifice d'alimentation de gaz (621).

8. Prétendeur pour un rétracteur de ceinture de sécurité d'un véhicule selon la revendication 7, **caractérisé en ce qu'**une première partie épaisse (623) est formée à l'intérieur de la partie creuse en L pour former le trou de guidage mobile droit (622) et un passage intermédiaire (624) est formé entre la première partie épaisse (623) et l'orifice d'alimentation de gaz (621).

9. Prétendeur pour un rétracteur de ceinture de sécurité d'un véhicule selon la revendication 8, **caractérisé en ce qu'**un espace de rotation sphérique (625) est raccordé entre une extrémité inférieure du trou de guidage mobile (622) et le passage intermédiaire (624).

10. Prétendeur pour un rétracteur de ceinture de sécurité d'un véhicule selon la revendication 9, **caractérisé en ce qu'**une seconde partie épaisse (626) est formée autour de l'espace de rotation sphérique (625).

11. Prétendeur pour un rétracteur de ceinture de sécurité d'un véhicule selon la revendication 10, **caractérisé en ce que** la seconde partie épaisse (626) a une épaisseur progressivement amincie depuis la partie située autour de l'espace de rotation sphérique (625) jusqu'aux deux côtés de celle-ci.
